# EUROPÄISCHE PATENTANMELDUNG

(11) **EP 1 473 135 A2**
(43) Veröffentlichungstag der Anmeldung: **03.11.2004**
(21) Anmeldenummer: 04003338.3
(22) Anmeldetag: 14.02.2004
(51) Int. Cl.: B29C 45/73, B29C 33/04

(54) **Zufuhrvorrichtung zur Versorgung von Temperiermittelkanälen eines Spritzgiesswerkzeuges**

(30) Priorität: 28.04.2003 DE 10319243
(71) Anmelder: Technotrans AG, 48336 Sassenberg (DE)
(72) Erfinder: Peick, Hubert, 59302 Oelde (DE)
(74) Vertreter: TER MEER STEINMEISTER & PARTNER GbR

(57) **Zusammenfassung**

Eine Zufuhrvorrichtung für ein Temperiermittel dient zur Versorgung von Temperiermittelkanälen (28,30,32,34) in den beiden Formhälften eines Spritzgiesswerkzeuges für flache, scheibenförmige Produkte, insbesondere CD's und DVD's. Die Temperiermittelkanäle (28,30,32,34) sind auf beiden Seiten des Formhohlraumes mit sich verzweigenden Teilleitungen (80,20,88,90) der Vor- und Rücklaufleitung (64,70) der Zufuhrvorrichtung verbunden. In den Teilleitungen (80,82) der Vorlaufleitung (64) oder der Rücklaufleitung (70) sind gesondert steuerbare Ventile (84,86) vorgesehen, die es gestatten, die beiden Formhälften in unmittelbarer Nachbarschaft des Formhohlraums unabhängig voneinander zu temperieren. Zwischen der Vorlaufleitung (64) und der Rücklaufleitung (70) ist ein Ausgleichsventil (76) vorgesehen, das gegenläufig zu den Ventilen (84,86) in den Teilleitungen öffnet und schliesst.

## Beschreibung

Die Erfindung betrifft eine Zufuhrvorrichtung für ein Temperiermittel zur Versorgung von Temperiermittelkanälen in den beiden Formhälften eines Spritzgiesswerkzeuges für flache, scheibenförmige Produkte, insbesondere CD's und DVD's.

Üblicherweise werden die Formhälften von Spritzgiesswerkzeugen ständig auf einer erhöhten Temperatur von in der Regel 50 - 140° C gehalten, die niedriger ist als die übliche Einspritztemperatur von 300 - 360° C, aber doch höher als die Raumtemperatur. Auf diese Weise wird zum einen gewährleistet, dass das einzuspritzende Kunststoffmaterial nicht zu rasch abkühlt und den Formhohlraum vollständig ausfüllt und dass andererseits der herzustellende Spritzling oder Formling in angemessener Zeit entformt werden kann. Die erwähnte Werkzeugtemperatur von 50 - 140° C ist im Verhältnis zur Einspritztemperatur zumindest so niedrig, dass sie als Entformungstemperatur in Betracht kommt. Ein besonderes Problem bei der Herstellung von dünnen und flachen Formlingen wie CDoder DVD-Rohlingen besteht darin, dass diese aufgrund ihrer Scheibenform wenig stabil sind und sich leicht verziehen. Insbesondere neigen diese Rohlinge dazu, sich zur einen oder anderen Seite zu wölben, je nachdem, auf welcher Seite sie zuerst abgekühlt und erstarrt sind. In der Praxis erweist es sich daher als notwendig, problematische Formlinge der genannten Art langsam und gleichmässig abkühlen zu lassen. Es liegt auf der Hand, dass diese Abkühlphase die Produktionsgeschwindigkeit erheblich einschränkt.

Die DE 195 33 045 A1 befasst sich mit einer Dauergiessform für unter anderem Kunststoff-Spritzguss. In der Formwand in unmittelbarer Umgebung des Formhohlraums befindet sich ein Leitkörper aus einem Material hoher Wärmeleitfähigkeit, in dessen Innerem sich ein oder mehrere Kanalsysteme für Temperierflüssigkeiten befinden. Die Formoberfläche soll vor dem Eingiessen auf eine gewünschte erhöhte Temperatur gebracht und unmittelbar nach dem Giessvorgang zu einem vorgegebenen Zeitpunkt auf eine gewünschte Abkühltemperatur heruntergekühlt werden. Durch Erwärmung vor dem Einspritzen soll verhindert werden, dass die Kunststoffmasse zu rasch erstarrt, so dass gewährleistet ist, dass der Formhohlraum vollständig ausgefüllt wird.

Durch Kühlung nach dem Einspritzen soll die Abkühlzeit reduziert und damit insgesamt die Taktzeit verkürzt werden.

Die WO 01/19590 A1 zeigt und beschreibt eine Vorrichtung zum Temperieren von Formwerkzeugen von Spritzgussmaschinen, bei dem ein Temperiermedium durch Leitungen im Formwerkzeug hindurch und über Ablaufleitungen zurückströmt. Als Nachteil bekannter Vorrichtungen wird angegeben, dass durch Vorsehen von Steuerventilen vor und nach den Formwerkzeugen keine konstanten Druckverhältnisse im Formwerkzeug eingestellt werden könnten, sondern der Druck des Temperiermediums durch das Öffnen und Schliessen der Ventile erhebliche Schwankungen erfahren soll. Es wird daher vorgeschlagen, nur an der Ausgangsseite der Formwerkzeuge Ventile zum Takten der Strömung des Temperiermediums anzuordnen. Dadurch soll sich ein wesentlich gleichmässiger Druckverlauf des Temperiermediums ergeben.

Der Erfindung liegt daher die Aufgabe zugrunde, eine Vorrichtung der eingangs genannten Art zu schaffen, die es gestattet, die Abkühlphase insbesondere von Formlingen wie CD's und DVD's so abzukürzen, dass eine seitliche Wölbung dieser flachen, scheibenförmigen Produkte unterbleibt, und eine gute Abformqualität der Mikrostruktur der Formlings-Oberfläche bzw. hohe Reproduzierbarkeit der Scheibenform gewährleistet ist.

Zur Lösung dieser Aufgabe ist die erfindungsgemässe Vorrichtung dadurch gekennzeichnet, dass die Temperiermittelkanäle auf beiden Seiten des Formhohlraumes mit sich verzweigenden Teilleitungen der Vor- und Rücklaufleitung des Zufuhrsystems verbunden sind, dass in den Teilleitungen der Vorlaufleitung oder der Rücklaufleitung gesondert steuerbare Ventile vorgesehen sind, und dass zwischen der Vorlaufleitung und der Rücklaufleitung ein Ausgleichsventil vorgesehen ist, das gegenläufig zu den Ventilen in den Teilleitungen öffnet und schliesst.

CD's und DVD's stehen hier als Beispiel für flache, scheibenförmige Produkte, die aufgrund ihrer im wesentlichen zweidimensionalen Struktur wenig Stabilität besitzen und dazu neigen, sich in Richtung der dritten Dimension zu verbiegen oder zu wölben.

Da die unmittelbare Umgebung des Formhohlraumes oder des Formnests zum einen aufgrund der Wärmeleitung, die innerhalb der Formhälften besteht, und zum anderen aufgrund der ständigen Aufnahme des flüssigen oder teigigen Kunststoffs auf relativ hoher Temperatur liegt, kann die erfindungsgemässe Verfahrensweise nur eine kurzfristige Impulskühlung bewirken, die aber zur Folge hat, dass die Abkühlung des Formlings beschleunigt wird. Darüber hinaus kann durch Steuerung der Kühlung oder allgemeiner, der Temperierung in der Umgebung des Formnests in beiden Formhälften im Verhältnis zueinander eine Möglichkeit geschaffen werden, Einfluss darauf zu nehmen, dass die Formlinge als absolut gerade, flache Scheiben ausgeworfen werden. Der Kühlimpuls kann also beispielsweise in der einen Formhälfte stärker als in der anderen sein. Er kann in der einen Formhälfte früher einsetzen als in der anderen oder in einer auch länger andauern als in der anderen. Es gibt zahlreiche Möglichkeiten der Einflussnahme und der Feinsteuerung mit dem Ziel der Herstellung absolut ebener flacher Scheiben.

Eine Rückerwärmung der Umgebung des Formhohlraumes auf die Werkzeugtemperatur erfolgt relativ rasch und automatisch aufgrund der guten Wärmeleitung innerhalb der aus Metall bestehenden Formhälften die ständig auf erhöhter Temperatur, der erwähnten Werkzeugtemperatur von z.B. 50 - 140°C gehalten werden. Dabei wird der kurze Wärmeentzug, der durch das erfindungsgemässe Verfahren eintritt, relativ rasch kompensiert.

Die erfindungsgemässe Vorrichtung umfasst einen Temperierfluidsystem, das auf einem Temperiermittel-Kreis basiert, in dem ein Temperiermittel ständig zirkuliert und auf einer vorgegebenen Temperatur gehalten wird. Zu diesem Zweck sind Kühl- und Heizeinrichtungen vorgesehen, beispielsweise ein Durchlauferhitzer einerseits und ein Wärmetauscher zur Abkühlung des Temperiermittels andererseits. Ausgehend vom Vorlauf des Temperiermittelkreises verzweigt sich die Vorlaufleitung, so dass jede Formhälfte gesondert mit Temperiermittel versorgt wird. In jeder Teilleitung ist ein gesondert steuerbares Ventil enthalten. Damit beim Schliessen der Ventile ein Druckstau vermieden und der Temperiermittel-Kreis in Bewegung gehalten wird, ist ein Ausgleichsventil vorgesehen, das sich einer Leitung befindet, die unmittelbar Vorlauf und Rücklauf verbindet.

Das Ausgleichsventil wird gegensinnig zu den beiden in den Teilleitungen des Vorlaufs befindlichen Ventilen gesteuert, schliesst also, wenn diese vollständig geöffnet sind und wird vollständig geöffnet, wenn diese geschlossen sind, mit entsprechenden Übergängen in den Zwischenbereichen. Es können Schalt- oder Überströmventile verwendet werden.

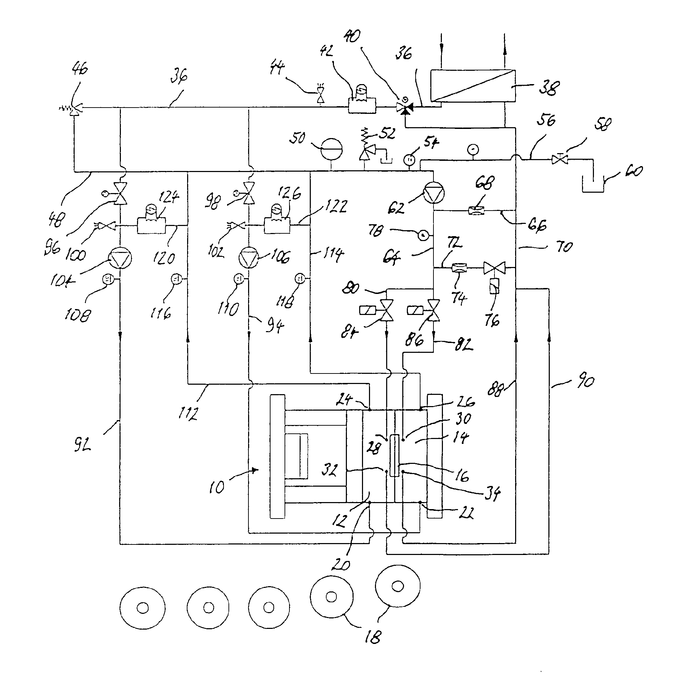

Im folgenden werden bevorzugte Ausführungsbeispiele der Erfindung anhand der beigefügten Zeichnung näher erläutert.

Die einzige Figur ist ein schematisches Schaltbild zur Veranschaulichung der erfindungsgemässen Vorrichtung.

In der Zeichnung ist schematisch eine Spritzgiessmaschine 10, repräsentiert durch zwei Formhälften 12 und 14 angedeutet. Die Formhälften bilden gemeinsam einen Formhohlraum 16, der beispielsweise zur Entnahme eines Formlings 18 geöffnet werden kann, indem die Formhälfte 12 von der Formhälfte 14 abgezogen wird. Der Formhohlraum 16 wird hier auch als Formnest bezeichnet.

Die Formhälften 12, 14 weisen jeweils einen Einlass 20, 22 auf, an dem ein inneres, nicht dargestelltes Temperierkanalsystem beginnt, das an einem Auslass 24, 26 endet. Das zugehörige Leitungssystem für die Zufuhr und Abfuhr eines geeigneten Temperiermediums soll später erläutert werden.

Der hier beschriebene Teil des Temperiersystems dient im wesentlichen dazu, die Formhälften in ihrer Gesamtheit auf eine Temperatur im Bereich der Einspritztemperatur, beispielsweise 90 bis 120° C zu halten.

In einem eng begrenzten Bereich in unmittelbarer Nachbarschaft des Formhohlraums 16 befinden sich weitere Einlässe 28, 30 und Auslässe 32, 34 eines unabhängigen Temperierkanalsystems, das nur die unmittelbare, nächste Umgebung des Formhohlraums beeinflusst.

Während über das zuerst beschriebene Kanalsystem mit den Einlässen 20, 22 kontinuierlich ein relativ warmes Temperiermedium zugeführt wird, das dazu dient, die gesamten Formhälften ständig auf der erhöhten Werkzeugtemperatur zu halten, ist das zweite Temperierkanalsystem mit den Einlässen 28, 30 nur dazu vorgesehen, in der unmittelbaren Umgebung des Formhohlraums nach der Einspritzphase einen relativ kurzen Kühlimpuls abzugeben.

Das zugehörige Versorgungssystem für das benötigte Kühlfluid soll anschliessend erläutert werden.

Über eine Leitung 36 wird ein Temperiermedium aus einem Wärmetauscher 38 entnommen. Der Wärmetauscher kann beispielsweise an das Wassernetz des Betriebes angeschlossen sein.

Das Medium gelangt über einen Mischer 40, auf den später noch eingegangen werden soll, zu einem Erhitzer 42, durch den die Temperatur bei Bedarf angehoben werden kann, zu einem Entlüftungsventil 44 und schliesslich zu einem Überströmventil 46. Von dieser Position ab soll die Leitung des inneren Kreises, um den es hier geht, als Rückleitung 48 betrachtet werden. An der Leitung 48 befindet sich im weiteren Verlauf ein Druckspeicher 50 und ein weiteres Überdruckventil 52 sowie ein Temperaturfühler 54, der für Regelungszwecke benötigt wird.

Stromabwärts des Temperaturfühlers zweigt eine Zweigleitung 56 ab, die es ermöglicht, überschüssiges Temperiermedium über ein Ventil 58 in einen Tank 60 abzulassen. Weiter stromabwärts folgt in der Rückleitung 48 eine Umwälzpumpe 62, die ein wesentlicher Bestandteil des erfindungsgemässen Systems ist und sowohl den zuvor geschilderten inneren Kreis mit den Leitungen 36 und 48 in Bewegung hält als auch die Temperierung des Formnests bewirkt, wie anschliessend erläutert werden soll.

Die Umwälzpumpe 62 fördert in eine Leitung 64, von der zunächst eine Leitung 66 mit einer Drosselstelle 68 abzweigt, die in eine weitere Rückleitung 70 mündet. Durch diese Rückleitung strömt das Temperiermedium je nach Stellung des Mischers 40 entweder direkt zurück in die Leitung 36 oder über den Wärmetauscher 38 und den ersten Abschnitt der Leitung 36 sowie den Mischer in den nachfolgenden Abschnitt der Leitung 36. Damit ergibt sich ein erster Zustand des erwähnten inneren Kreises, bei dem das Temperierfluid über die Leitungen 36 und 48 und die Pumpe 62 im inneren Kreis zirkuliert.

Die Drosselstelle 68 gestattet einen Mindestleckstrom, der die Mindestzirkulation im inneren Kreis aufrecht erhält.

Anschliessend an die Leitung 66 zweigt von der Leitung 64 eine weitere Leitung 72 ab, die eine Drosselstelle 74 und ein Ventil 76 enthält, deren Funktion später erläutert wird. Auch diese Leitung 72 mündet wiederum in die Rückleitung 70. Zwischen dem Abzweig der beiden Leitungen 66 und 72 befindet sich ein Drucksensor 78.

Im weiteren Verlauf verzweigt sich die Leitung 64 in zwei Teilleitungen 80 und 82, in denen sich Ventile 84 und 86 befinden. Diese Ventile können unabhängig voneinander gesteuert werden, so dass unterschiedliche Mengen von Temperiermedien in die Einlässe 28 und 30 des Kanalsystems im unmittelbaren Umkreis des Formhohlraums 16 eingeleitet werden können. Nach dem Durchlaufen dieses Kanalsystems tritt das Temperiermedium aus den Auslässen 32 und 34 aus und gelangt über die beiden Rückleitungen 88 und 90, die im weiteren Verlauf zusammengefasst werden, in die Rückleitung 70.

Das bisher geschilderte System bedeutet, dass mit Hilfe allein der einen Pumpe 62 zum einen der sogenannte innere Kreis in Bewegung und auf der gewünschten Temperatur gehalten werden kann und dass im übrigen im Zusammenwirken mit den Ventilen 84 und 86 der Kühlmitteldurchsatz in dem Kanalsystem am unmittelbaren Umfang des Formhohlraums gesteuert werden kann. Da die Ventile 84 und 86 unabhängig voneinander einstellbar sind, besteht die Möglichkeit, durch unterschiedliche Durchsatzmengen des Temperiermediums unterschiedliche Temperierwirkungen zu erzielen. Wie erwähnt, sind Einzelheiten hierzu Frage der Erprobung. Die Drosselstellen 68 und 74, auf die zuvor hingewiesen wurde, sind so ausgelegt, dass die obere Drosselstelle 68 einen Mindestleckstrom durchlässt, der es gestattet, in dem zuvor erwähnten inneren Kreis eine ständige Zirkulation aufrechtzuerhalten. Die untere Drosselstelle 74 ist in Reihe mit dem Ventil 76 geschaltet. Dieses Ventil 76 wird gegenläufig zu den Ventilen 84 und 86 gesteuert, die Temperierfluid in die Temperiermittelkanäle 28, 30, 32, 34 in der unmittelbaren Umgebung des Formhohlraums einlassen. Das bedeutet, dass das Temperiermittel ständig im Wechsel über die Ventile 84 und 86 in die beiden Formhälften einströmen und über das Ventil 76 unmittelbar zurückströmen kann.

Bei Schliessung der Ventile 84, 86 kommt es nicht zu einem plötzlichen Rückstau des Temperiermittels mit den damit verbundenen negativen Folgen.

Der Vollständigkeit halber soll auch erläutert werden. wie im vorliegenden Zusammenhang die an sich übliche Temperierung der Formhälften in ihrer Gesamtheit erfolgt.

Von der Leitung 36, die als Vorlaufleitung des inneren Kreises bezeichnet werden kann, zweigen zwei Vorlaufleitungen 92 und 94 ab, die zu den Einlässen 20 und 22 des nicht dargestellten Kanalsystems für die Temperierung der beiden Formhälften führen. In diesen Vorlaufleitungen 92 und 94 befinden sich nacheinander Regelventile 96 und 98, Entlüftungsventile 100 und 102 und Pumpen 104 und 106 sowie Temperaturfühler 108 und 110.

Aus den Auslässen 24 und 26 des Kanalsystems der Formhälften treten Rückleitungen 112, 114, aus, in denen sich Temperaturfühler 116, 118 befinden. Die Rückleitungen 112 und 114 münden letztlich in die Rückleitung 48 des inneren Kreises, sind aber zuvor über eine Zweigleitung 120, 122, in der sich Erhitzer 124, 126 befinden, mit der Vorlaufleitung 92, 94 verbunden. Je nach Stellung der Ventile 96, 98 erfassen daher die Pumpen 104, 106 entweder kühleres Medium aus der Leitung 36 des inneren Kreises oder rückerhitztes Medium aus der Zweigleitung 120, 122.

## Patentansprüche

1. Zufuhrvorrichtung für ein Temperiermittel zur Versorgung von Temperiermittelkanälen (28,30,32,34) in den beiden Formhälften eines Spritzgiesswerkzeuges für flache, scheibenförmige Produkte, insbesondere CD's und DVD's, **dadurch gekennzeichnet, dass** die Temperiermittelkanäle (28,30,32,34) auf beiden Seiten des Formhohlraumes mit sich verzweigenden Teilleitungen (80,20;32,34) der Vor- und Rücklaufleitung (64,70) des Zufuhrsystems verbunden sind, dass in den Teilleitungen (80,82) der Vorlaufleitung (64) oder der Rücklaufleitung (70) gesondert steuerbare Ventile (84,86) vorgesehen sind, und dass zwischen der Vorlaufleitung (64) und der Rücklaufleitung (70) ein Ausgleichsventil (76) vorgesehen ist, das gegenläufig zu den Ventilen (84,86) in den Teilleitungen öffnet und schliesst.

2. Zufuhrvorrichtung nach Anspruch 1, **dadurch gekennzeichnet, dass** zwischen dem Vorlauf und dem Rücklauf des Temperiermittelkreises (36,48,64,70) parallel zu dem Ausgleichsventil (76) eine mit einer Drosselstelle (68) versehene Verbindungsleitung (66) vorgesehen ist.

3. Zufuhrvorrichtung nach Anspruch 1 oder 2, **dadurch gekennzeichnet, dass** im Temperiermittelkreis (36,48,64,70) ein Durchlauferhitzer (42) und/oder ein Wärmetauscher (38) zur Kühlung des Temperiermediums vorgesehen ist.

4. Zufuhrvorrichtung einem der Ansprüche 1 bis 3, **dadurch gekennzeichnet, dass** von dem Vorlauf des inneren Kreises Vorlaufleitungen (92, 94) abzweigen, die zu den ersten Temperiermittelkanälen (20,22,24,26) führen, dass die Auslässe (24,26) der ersten Temperiermittelkanäle über Rücklaufleitungen (112,114) mit dem Rücklauf des Temperiermittel-Kreises verbunden sind, und dass die Rücklaufleitungen (112,114) der ersten Temperiermittelkanäle jeweils mit den zugehörigen Vorlaufleitungen (92,94) über Verbindungsleitungen (120,122) direkt verbunden sind, in denen Erhitzer (124,126) befinden.

5. Zufuhrvorrichtung nach einem der Ansprüche 1 bis 4, **dadurch gekennzeichnet, dass** in dem Temperiermittel-Kreis eine Umwälzpumpe (62) stromaufwärts der Teilleitungen (80,82) vorgesehen ist.
